# EUROPEAN PATENT APPLICATION

(11) **EP 4 009 458 A1**
(43) Date of publication of application: **08.06.2022**
(21) Application number: 21208983.3
(22) Date of filing: 18.11.2021
(51) Int. Cl.: H02G 1/08, H01B 15/00, G02B 6/54

(54) **APPARATUS AND METHOD FOR EJECTING A CORE FROM A CABLE, IN PARTICULAR A COAXIAL CABLE**

(30) Priority: 04.12.2020 NL 2027051
(71) Applicant: CXT Invest B.V., 3734 EE Den Dolder (NL)
(72) Inventor: VELDHOEN, Johannes, 3734 EE Den Dolder (NL); LIMBURG, Ronald, 3734 EE Den Dolder (NL); DOMINESE, Elisa, 3734 EE Den Dolder (NL)
(74) Representative: Melchior, Robin

(57) **Abstract**

The invention relates to an apparatus and a method for ejecting a core from a cable, in particular a coaxial cable, wherein the apparatus comprises a first connector comprising a first sealing section for connection to the cable in the first axial direction and for sealing a first annular volume of the cable surrounding the core at said first end in a pressure-tight manner, wherein the first sealing section further comprises a first connector inlet for pressurizing said first annular volume, wherein the first connector comprises an ejection aperture for passing a leading end of the core projecting from the first end through and out of the first connector in an ejection direction parallel to the first axial direction, and wherein the apparatus further comprises an aperture sealing member for sealing the ejection aperture in a pressure-tight manner while the core is being ejected through said ejection aperture.

## Description

### BACKGROUND

The invention relates to an apparatus and a method for ejecting a core from a cable, in particular a coaxial cable.

Due to the rapid technological developments in the field of telecommunications, there is a high demand for cables through which large amounts of data can be transmitted. Laying new cables is not only costly and time-consuming; existing cables or underground infrastructure may be damaged in the process. An alternative is to eject the old core, i.e. a copper core, from an existing cable and to inject a new core, i.e. a modern optical waveguide, into the empty cable for improved data transmission through the existing cable.

US 2004/117964 A1 discloses a method for removing a cable core from a cable sheath, which cable core can then be replaced with a modern optical waveguide. First, a core seal is arranged around the end of the cable core plus its envelope to generate an airtight and pressure-sealed closure of the cable core. Then, a metal sleeve is pushed over the cable end and glued to the cable sheath. Subsequently, a lid is arranged over the sleeve and a flowable medium or lubricant is introduced in the annular space between the cable sheath and the envelope via a feed line. The flowable medium is precisely targeted into the annular space between the inner side of the cable sheath and the envelope of the cable core. By introducing a flowable medium under pressure into the cable tube friction can be reduced. Optionally, both ends of the cable may be closed in an air-tight and pressure-sealed manner. When sufficient pressure has been built up, the lid is screwed off. Finally, a clamp is connected to the core seal that is exposed when removing the lid to exert a tensile force onto said core seal and to remove the cable core.

### SUMMARY OF THE INVENTION

A disadvantage of the method according to US 2004/117964 A1 is that wetting the entire cable core plus its envelope, hereafter referred to as the 'internals', with lubricant may not be enough to successfully pull out the internals, especially over longer distances, i.e. in excess of fifty meters. In particular, the internals of a cable will be subject to ageing, as a result of which the outer surface of said internals is roughened and very difficult to pull out, even when lubricated. To complicate matters, the diameter of the internals may not be constant along the length of the cable. For example, the internals of a coaxial cable with a so-called 'bamboo' type construction comprise a dielectric that is spaced apart from the cable core by annular placeholders. When the outer sheath is crimped onto the internals, the dielectric is compressed slightly, except at the positions of the placeholders. As a result, small annular ridges are formed in the outer surface of the dielectric along the length thereof, which may prevent the even distribution of lubricant throughout the cable and which may further increase the resistance to pull out said internals.

It is an object of the present invention to provide an apparatus and a method for ejecting a core from a cable, in particular a coaxial cable, wherein the internals can be pulled out more easily, even over longer distances.

According to a first aspect, the invention provide an apparatus for ejecting a core from a cable, in particular a coaxial cable, wherein the apparatus comprises a first connector that defines a first connector axis extending in a first axial direction, wherein the first connector comprises a first sealing section for connection to a first end of the cable in the first axial direction and for sealing a first annular volume of the cable at said first end in a pressure-tight manner, wherein the first annular volume surrounds the core, wherein the first sealing section further comprises a first connector inlet for pressurizing said first annular volume, wherein the first connector comprises an ejection aperture for passing a leading end of the core projecting from the first end through and out of the first connector in an ejection direction parallel to the first axial direction, and wherein the apparatus further comprises an aperture sealing member for sealing the ejection aperture in a pressure-tight manner while the core is being ejected through said ejection aperture.

The ability of the aperture sealing member to seal the ejection aperture while the core is being ejected allows for ejection of said core under pressure. In particular, a closed or substantially closed pressurized system can be created that can remain pressurized during the ejection of the core. This can be particularly useful when extracting cores from cables in which the core and/or elements associated with said core, such as placeholders, are tightly packaged by the layers of the cable that were crimped onto said core and/or the elements associated with said core during the initial manufacture of said cable. By expanding at least some of the layers that bound the first annular volume and, more importantly, by keeping said layers expanded during the ejection, the core and/or the elements associated with said core can be loosened and can be extracted, removed and/or ejected more easily. In particular, by pressurizing the first annular volume surrounding the core, the layer that bounds said first annular volume, more specifically the dielectric, can be expanded. Hence, the core ejection requires less pulling force on the core and/or can be performed over longer lengths of the cable, i.e. in excess of fifty meters.

In one embodiment, the apparatus comprises an annular plug that is insertable into the ejection aperture in the first axial direction, wherein the aperture sealing member, during a preparation stage of the core ejection, is formed by said annular plug. The annular plug can remain place in the ejection aperture during the core ejection if said core ejection involves only the ejection of the core. However, if the core is provided with placeholders or other elements associated with said core, the annular plug may be removed from the ejection aperture together with the core when the core is being ejected, provided that another part of the apparatus can take over the functionality as aperture sealing member from the annular plug.

Preferably, the apparatus further comprises a compression seal fitting that lines the ejection aperture, wherein the compression seal fitting is compressible in the first axial direction to seal the annular plug with respect to the ejection aperture. Most preferably, the annular plug is removable from the compression seal fitting in the ejection direction when the compression seal fitting is in an uncompressed state. The compression seal fitting can reliably and releasably seal the annular plug with respect to the ejection aperture.

In another embodiment the apparatus comprises a core collector for pulling in the core in the ejection direction through the ejection aperture, wherein the core collector comprises a pressure-tight housing that is connectable to the first connector to communicate in a pressure-tight manner with the ejection aperture, wherein the aperture sealing member, during a collection stage of the core ejection, is formed by said pressure-tight housing. The core collector can thus effectively form part of or an extension of the closed pressurized system formed by the first connector at the first end of the cable. In particular the pressure-tight housing, when connected to the first connector, is arranged for maintaining pressure in the cable. The pressure-tight housing can be mounted to the first connector already during the preparation stage to act as the aperture sealing member, or it may take over the sealing functionality from the previously mentioned annular plug.

In a further embodiment thereof the core collector is a winch. The winch can be used to compactly collect a considerable length of the ejected core by winding.

In a further embodiment thereof the core collector comprises a reel that is located inside the pressure-tight housing. The core can thus be collected onto said reel in a pressurized environment within the pressure-tight housing of the winch.

In a further embodiment thereof the core collector comprises a collector inlet for pressurizing the pressure-tight housing. Hence, the pressure-tight housing of the core collector can be pressurized prior to removing the annular plug, such that the pressures on both sides of the annular plug have already been equalized.

In a further embodiment thereof the apparatus comprises an annular plug that is insertable into the ejection aperture in the first axial direction, wherein the aperture sealing member, during a preparation stage of the core ejection, is formed by said annular plug, wherein the pressure-tight housing is arranged for taking over the function of annular plug as aperture sealing member in the collection stage of the core ejection. Hence, the pressure-tight housing can effectively take over the functionality of the annular plug as aperture sealing member when the annular plug is removed from the ejection aperture.

Preferably, the apparatus comprises a release member for releasing the annular plug in the ejection direction from the ejection aperture when the pressure-tight housing is connected to the first connector. Hence, an operator does not have to touch the annular plug directly. Instead, the operator can remove the annular plug by operating the release member.

More preferably, the release member is externally operable with respect to the first connector and/or the core collector. Hence, the annular plug can be released from the ejection aperture even when said annular plug is not accessible.

Most preferably, the apparatus further comprises a compression seal fitting that lines the ejection aperture, wherein the release member is displaceable relative to the compression seal fitting in the first axial direction to compress or relax the compression seal fitting, thereby sealing or releasing the annular plug with respect to the ejection aperture. The release member may simply decompress the compression seal fitting, after which the annular plug can be pulled out of the compression seal fitting together with the core as the core is being ejected in the ejection direction.

In a further preferred embodiment the release member is a threaded flange that is arranged to be torqued in the first axial direction along a correspondingly threaded part of the first connector or the core collector, wherein the threaded flange is externally accessible for applying torque. The threaded flange may for example be conveniently engaged with a manually operable tool, i.e. a wrench.

In one particular embodiment the cable comprises a dielectric, wherein the first sealing section comprises a first fixation assembly for fixating the dielectric with respect to the first connector in the first axial direction. The fixation of the dielectric allows for the ejection of the core and any elements, such as placeholders, associated with said core to be removed from within said dielectric during the ejection of the core. Moreover, by fixating the dielectric, the first connector can effectively seal the first annular volume within said dielectric.

Preferably, the first fixation assembly comprises a first clamping body with an at least partially frustoconical bore for receiving the dielectric and a first conical wedge that is drivable into said at least partially frustoconical bore to clampingly fixate and locally widen the dielectric against the first clamping body, wherein the first conical wedge comprises a central bore that allows for communication between the first connector inlet and the first annular volume through the first conical wedge. Hence, despite the presence of the first conical wedge, the first annular volume can still be pressurized.

In another embodiment the ejection aperture is concentric to the first connector axis. The ejection aperture can thus be arranged in-line with a coaxial core.

In another embodiment the first connector comprises a second sealing section upstream of the first sealing section with respect to the ejection direction for sealing a second annular volume of the cable radially outside of the first annular volume at said first end in a pressure-tight manner and a second connector inlet for pressurizing said second annular volume. Hence, the second annular volume can be pressurized as well, allowing for expansion of the layers that bound said second annular volume.

Preferably, the first sealing section comprises a separation member for separating the second annular volume in a pressure-tight manner from the first annular volume. Hence, the first annular volume is unable to communicate with the second annular volume within the boundaries of the first connector. This allows for the annular volumes to be individually pressurized.

In a further embodiment thereof the cable comprises an outer sheath, wherein the second sealing section comprises a second fixation assembly for fixating the outer sheath with respect to the first connector in the first axial direction. The fixation of the outer sheath allows the first connector to effectively seal the second annular volume within said outer sheath. Moreover, the fixation prevents unintentional retraction of the cable from the first connector.

Preferably, the second fixation assembly comprises a second clamping body with an at least partially frustoconical bore for receiving the outer sheath and a second conical wedge that is drivable into said at least partially frustoconical bore to clampingly fixate and locally widen the outer sheath against the second clamping body, wherein the second conical wedge comprises a central bore that allows for communication between the second connector inlet and the second annular volume through the second conical wedge. Hence, despite the presence of the second conical wedge, the second annular volume can still be pressurized.

More preferably, the cable further comprises a conducting shield extending concentrically inside the outer sheath, wherein the second sealing section comprises a guide assembly for guiding the conducting shield through the first connector in the first axial direction. The conducting shield can be reliably kept in position, for example when accessing the first connector to heat the conducting shield by running electrical current through said conducting shield.

More preferably, the guide assembly comprises a third clamping body with a central bore for guiding the conducting shield and a receiving body for receiving the third clamping body. The second connector inlet can communicate with the second annular volume via the space between the third clamping body and the third conical wedge, or alternatively via the conducting shield which is typically permeable to fluid.

In a further preferred embodiment thereof, including the limitation of the second conical wedge, the receiving body is the second conical wedge. Hence, no separate receiving body is required. The first connector can therefore be more compact and/or less complex.

In another embodiment the first connector comprises a plurality of annular sealing elements, preferably O-rings. The annular sealing elements can effectively seal transitions between parts of the connector that require sealing to obtain the aforementioned pressurization of the first annular volume and/or the second annular volume.

In another embodiment the apparatus further comprises a second connector that defines a second connector axis extending in a second axial direction, wherein the second connector comprises a third sealing section for receiving a second end of the cable opposite to the first end and for sealing the first annular volume in a pressure-tight manner at said second end. By sealing the first annular volume at the first end and the second end of the cable, a closed or substantially closed pressurized system can be created, optionally including the pressure-tight housing of the core collector at the first end and an end cap, described hereafter, at the second end.

Preferably, the second connector comprises an access aperture concentric to the second connector axis for passing a trailing end of the core projecting from the second end through and out of the second connector in the second axial direction, wherein the second connector further comprises a sealing grommet for sealing the access aperture in a pressure-tight manner while the trailing end projects out of the second connector through said access aperture. The trailing end of the core can thus be accessed, i.e. for heating purposes.

More preferably, the apparatus further comprises an end cap that is connectable to the second connector for sealing the access aperture in a pressure-tight manner when the trailing end is retracted out of the access aperture into the second connector. The end cap can ensure that the pressure in the first annular volume is maintained despite the retraction of the core from said access aperture. The end cap may be connected to the second connector when access to the trailing end of the core is no longer required.

In a further embodiment thereof the second connector comprises a third inlet for pressurizing said first annular volume. The first annular volume can thus be pressurized both from the first end and the second end of the cable.

According to a second aspect, the invention provide a method for ejecting a core from a cable, in particular a coaxial cable, wherein the method comprises the steps of:
- sealing a first annular volume of the cable at a first end of the cable, wherein the first annular volume surrounds the core;
- pressurizing the first annular volume; and
- ejecting the core from the cable and simultaneously maintaining the first annular volume sealed at the first end.

Hence, a closed or substantially closed pressurized system can be created that can remain pressurized during the ejection of the core. Similar to the apparatus, the method can be particularly useful when extracting cores from cables in which the core and/or elements associated with said core, such as placeholders, are tightly packaged by the layers of the cable that were crimped onto said core and/or the elements associated with said core during the initial manufacture of said cable. By expanding at least some of the layers that bound the first annular volume and, more importantly, by keeping said layers expanded during the ejection, the core and/or the elements associated with said core can be loosened and can be extracted, removed and/or ejected more easily. Hence, the core ejection requires less pulling force on the core and/or can be performed over longer lengths of the cable, i.e. in excess of fifty meters.

The embodiments of the method below have the same technical advantages as the corresponding embodiments of the apparatus, which will not be repeated hereafter unless the method adds a technical advantage over the apparatus.

In a further embodiment the cable comprises a dielectric, wherein the first annular volume is located radially within the dielectric.

Preferably, the cable comprises placeholders for concentrically positioning the core relative to the dielectric, wherein the method comprises the step of loosening the placeholders from the dielectric by expanding the dielectric through the pressurization of the first annular volume prior to the step of ejecting the core from the cable.

In a further embodiment of the method, the cable comprises a second annular volume radially outside the first annular volume, wherein the method further comprises the steps of:
- sealing the second annular volume at the first end; and
- pressurizing the second annular volume.

Preferably, the method comprises the step of pressurizing the first annular volume and the second annular volume with different pressures and/or at different points in time. This allows for more flexibility when expanding the cable. In particular, the layers can be individually and/or selectively expanded depending on the stage of the ejection. The layers may be expanded simultaneously or alternately.

More preferably, the cable comprises an outer sheath and a dielectric located radially between the core and the outer sheath, wherein the second annular volume is located radially between the dielectric and the outer sheath, wherein the method comprises the steps of:
- initially pressurizing the second annular volume to expand the outer sheath;
- subsequently pressurizing the first annular volume to expand the dielectric against the expanded outer sheath; and
- then ejecting the core from the cable.

Hence, a two-stage expansion can be obtained. In particular, by expanding the outer sheath first, room can be created for the subsequent expansion of the dielectric.

Most preferably, the method further comprises the step of lowering the pressure in the second annular volume prior to or during the step of pressurizing the first annular volume. It can thus be prevented that the pressure in the second annular volume counteracts the pressurization of the first annular volume.

In another embodiment the method comprises the step of repeatedly decompressing and pressurizing the first annular volume and/or the second annular volume. It has been found that by repeatedly pressurizing the first annular volume and/or the second annular volume, the tendency of the outer sheath and/or the dielectric to return to its original diameter can be reduced.

In a further embodiment the method further comprises the step of heating the core, preferably by putting an electrical current on the core, while maintaining the first annular volume sealed at the first end. The heating of the core can weaken the layers surrounding said core, thereby reducing the resistance to the core ejection.

In a further embodiment the method further comprises the steps of:
- sealing the first annular volume at a second end of the cable opposite to the first end; and
- ejecting the core from the cable and simultaneously maintaining the first annular volume sealed at both the first end and the second end.

In a further embodiment of the method the core is collected in a core collector having a pressure-tight housing connectable in an pressure-tight manner with the first annular volume.

Preferably, the pressure-tight housing is pressurized to the same or substantially the same pressure as the first annular volume prior to connection to said first annular volume.

In a further embodiment of the method the first annular volume is pressurized using a liquid or a gas, preferably comprising a lubricant. A liquid or a gas, i.e. oil or air, can be used to effectively pressurize the first annular volume. The lubricant may assist in reducing the friction between the core and/or its associated elements and the surrounding layers of the cable.

In another embodiment, the steps of the aforementioned method are performed using the apparatus according to the first aspect of the invention. Hence, from here onwards, the method includes the use of the apparatus with all the features of the apparatus according to the first aspect of the invention.

Preferably, the apparatus comprises an annular plug that is insertable into the ejection aperture in the first axial direction and a core collector for pulling in the core in the ejection direction through the ejection aperture, wherein the core collector comprises a pressure-tight housing that is connectable to the first connector to communicate in a pressure-tight manner with the ejection aperture, wherein the method further comprises the steps of:
- inserting the annular plug into the ejection aperture to act as the aperture sealing member during a preparation stage of the core ejection; and
- removing the annular plug from the ejection aperture in the ejection direction during a collection stage of the core ejection;
wherein the method further comprises the steps of:
- connecting the pressure-tight housing to the first connector prior to removing the annular plug from the ejection aperture; and
- simultaneously with the removal of the annular plug from the ejection aperture taking over the function of annular plug as aperture sealing member with the pressure-tight housing.

In a further embodiment the cable comprises a dielectric and placeholders for concentrically positioning the core relative to the dielectric, wherein the method further comprises the step of pulling out the place holders through the ejection aperture together with the ejection of the core. Hence, the placeholders can be removed as well, thereby leaving more space for the insertion of a modern type of data carrier, i.e. an optical waveguide.

In another embodiment the method further comprises the step of introducing an extraction cord into the cavity vacated by the core. The extraction cord can be used to remove or extract any obstacles, such as placeholders, remaining in the cable. Preferably, said extraction cord has a tensile strength higher than that of the core, so that a greater pulling force may be exerted onto said extraction cord without breaking.

The various aspects and features described and shown in the specification can be applied, individually, wherever possible. These individual aspects, in particular the aspects and features described in the attached dependent claims, can be made subject of divisional patent applications.

In particular, it is observed that the core collector with the pressure-tight housing may be used as a part of a closed, pressurized system that is not necessarily limited to the aforementioned connectors.

In addition, it is observed that the first connector having (at least) two sealing sections to communicate with and/or pressurize two annular volumes individually from each other can also be applied independently from the apparatus as a whole that is configured for sealing the ejection aperture while the core is projecting out of the first connector through said ejection aperture.

### BRIEF DESCRIPTION OF THE DRAWINGS

The invention will be elucidated on the basis of an exemplary embodiment shown in the attached schematic drawings, in which:
figure 1 shows a side view of a cable and an apparatus for ejecting a core from said cable according to an exemplary embodiment of the invention, wherein the apparatus comprises a first connector, a second connector and a core collector;
figure 2 shows an isometric view of the first connector and the core collector according to figure 1;
figure 3 shows a cross section of the first connector and the core collector according to the line III-III in figure 2;
figure 4 shows an isometric view of the second connector according to figure 1;
figure 5 shows a cross section of the second connector according to the line V-V in figure 4;
figures 6A, 6B and 6C show cross sections of the first connector during the steps of a method for ejecting the core from the cable during a preparation stage of said core ejection; and
figures 6D, 6E and 6F show cross sections of the first connector and the core collector during the steps of the method for ejecting the core from the cable during a collection stage of said core ejection.

### DETAILED DESCRIPTION OF THE INVENTION

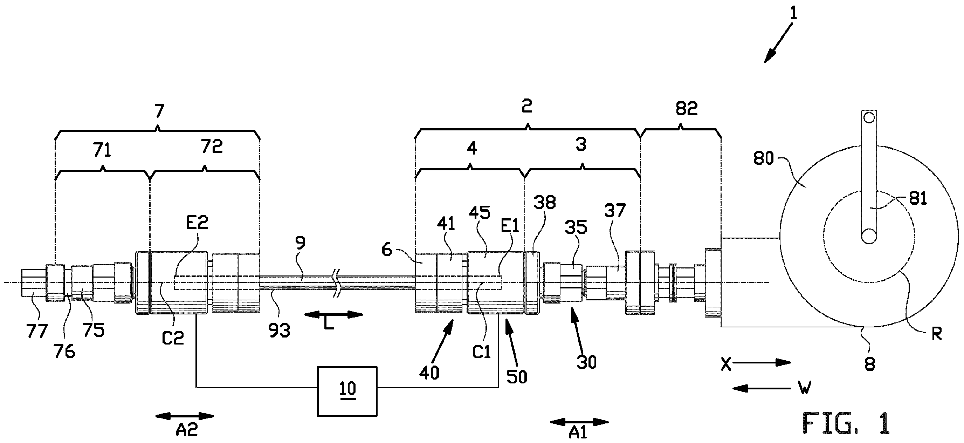

Figure 1 shows a system or an apparatus 1 for extracting, removing or ejecting a core 90 from a cable 9, in particular a cable for electrical, telecommunication or data communication.

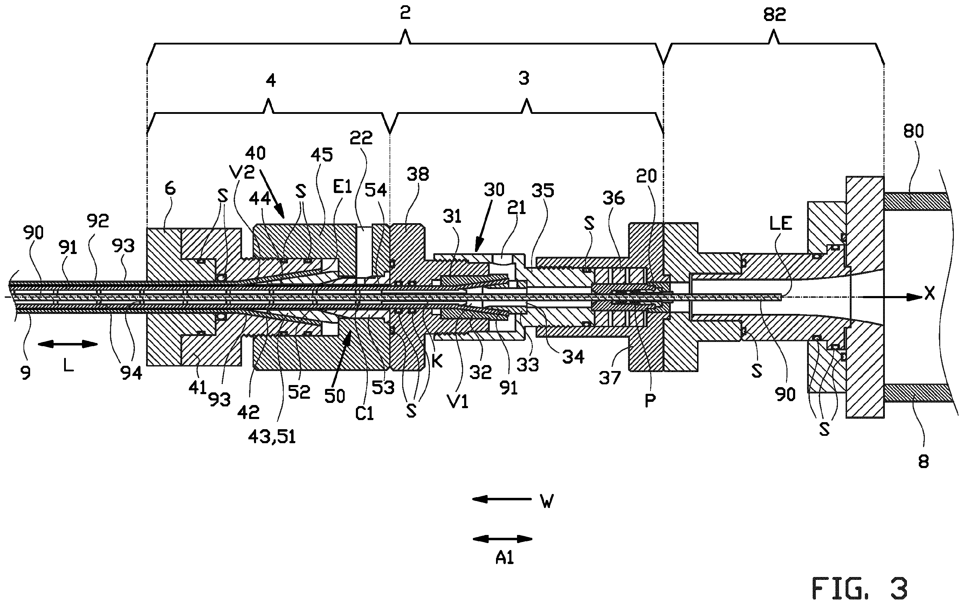

In this exemplary embodiment, the cable 9 is a coaxial or coax cable, i.e. a cable having coaxially or concentrically arranged layers. In particular, as best seen in figure 3, the cable 9 comprises the aforementioned core 90, a dielectric 91 concentrically arranged around said core 90, a conducting shield 92 concentrically arranged around the dielectric 91 and an outer sheath 93 concentrically arranged around the conducting shield 92. In this exemplary embodiment, the core 90 comprises one or more copper conductors. The dielectric is made from a suitable plastic material, for example a polyethylene. The conducting shield 92 is made from a non-welded copper foil that is wound helically around the dielectric 91. The outer sheath is again made from a suitable plastic material, for example a polyethylene.

The dielectric 91 is spaced apart from the core 90 by annular spacers or placeholders 94 mounted at intervals along the core 90. During the manufacturing of the cable 9, the outer sheath 93 is crimped onto the conducting shield 92 and the dielectric 91. As a result the dielectric 91 is compressed slightly, except at the positions of the placeholders 94. As a result, small annular ridges 95 are formed in the outer surface of the dielectric 91 along the length thereof. Because of the annular ridges 95, the outside of the dielectric 91 resembles a bamboo-like structure. A cable constructed in this manner is also known as a COAX 3 Bamboo cable.

The cable 9 is an existing cable that may have been buried for a long period of time. By ejecting the core 90, a newer, more modern data transmission medium, such as an optical wave guide, may be introduced into the existing cable 9.

To remove the core 90 from the cable 9, the cable 9 has to be made accessible for core ejection, i.e. by exposing said cable 9 at two spaced apart locations through digging and cutting the exposed parts of the cable 9 to create a first end E1 and a second end E2, respectively. Alternatively, the existing terminal ends of the cable 9 may be disconnected at the source and/or the destination. In other words, one or both ends E1, E2 may be formed by the existing terminal ends of the cable 9, and/or one or both ends E1, E2 are formed by cutting said cable 9. The length of the cable 9 between the first end E1 and the second end E2 may remain buried or inaccessible. In the case of the aforementioned coaxial cable, the cable 9 is stripped at both ends E1, E2 such that the conducting shield 92, the dielectric 91 and the core 90 project progressively further from the outer sheath 93.

With the apparatus 1 according to the present invention, the core 90 may be removed from a cable 9 with a considerable length between the first end E1 and the second end E2, for example a length in excess of fifty meters, more preferably in excess of one-hundred meters. The cable 9 has a longitudinal direction L that may vary depending on the path of said cable 9.

As best seen in figure 1, the apparatus 1 comprises a first connector 2 for connection to the first end E1 of the cable 9, a second connector 7 for connection to the second end E2 of the cable 9 and a core collector 8 for collecting the core 90 from the cable 9.

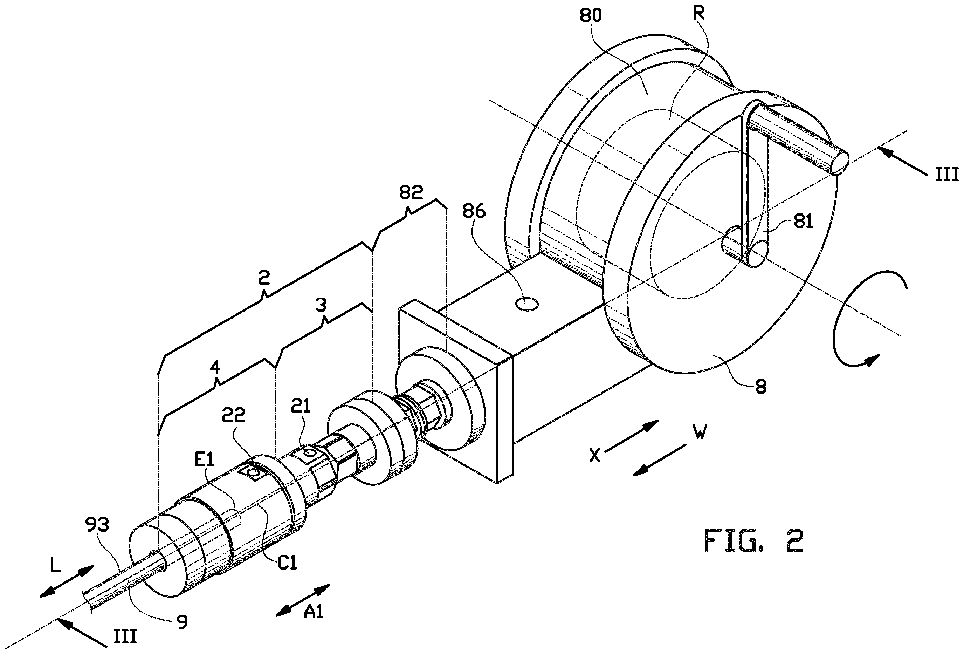

As shown in figures 2 and 3, the first connector 2 defines a first connector axis C1 extending in a first axial direction A1. The first connector 2 further has a radial direction perpendicular to said first axial direction A1 The first connector 2 is arranged or configured for connection to the first end E1 of the cable 9. When connected, the longitudinal direction L of the cable 9, at the said first end E1, is parallel or substantially parallel to the first axial direction A1. More in particular, the first connector 2, being cylindrical or substantially cylindrical, is arranged or configured to be connected in a concentric and/or coaxial relationship to the first end E1 of the cable 9.

As show in figure 3, the first connector 2 comprises an ejection aperture 20 concentric to or coaxial with the first connector axis C1 for passing a leading end LE of the core 90 projecting from the stripped first end E1 through and out of the first connector 2 in an ejection direction X parallel or substantially parallel to the first axial direction A1. The freely projecting leading end LE of the core 90 may be accessed at the first end E1 of the cable 9 to run electrical current through said core 90, i.e. for the purpose of heating said core 90 and thereby weakening the layers and/or the placeholders 94 surrounding said core 90 to facilitate the ejection.

The first connector 2 comprises a first sealing section 3 and a second sealing section 4 for connection to the cable 9 in the first axial direction A1. The first sealing section 3 is arranged or configured for sealing a first or radially inner annular volume V1 of the cable 9 at or near said first end E1 in a pressure-tight manner. The second sealing section 4 is arranged or configured for sealing a second or radially outer annular volume V2 of the cable at or near the first end E1 in a pressure-tight manner.

In this exemplary embodiment, the first annular volume V1 is formed or located between the core 90 and the dielectric 91. In particular, the first annular volume V1 surrounds the core V1. The second annular volume V2 is formed or located between the dielectric 91 and the outer sheath 93. Typically, the helical windings of the conducting shield 92 are permeable to fluids. The second annular volume V2 may thus extends radially inside, outside or radially on both sides of the conducting shield 92.

The first connector 2 further comprises a first connector inlet 21 and a second connector inlet 22 for pressurizing said first annular volume V1 and said second annular volume V2, respectively. The connector inlets 21, 22 are each connected to a source of compressed fluid (not shown). The connector inlets 21, 22 are preferably connected to different sources of compressed fluid that can be individually controlled, so as to individually control the pressurization of the first annular volume V1 and the second annular volume V2.

In the context of the present invention, the term 'pressure-tight' is to be interpreted as an assembly of parts that is constructed or assembled in a manner tight enough to prevent significant passage of fluid, i.e. a liquid or a gas, under pressure from said assembly of parts. Depending on the medium used in the method described hereafter, the assembly of parts may be gas-tight, air-tight, oil-tight or watertight. The medium may further include a lubricant and/or a solvent. The term 'pressurized' or 'under pressure' is to be interpreted as a volume that is kept at a pressure higher than the ambient pressure surrounding the cable 9.

As shown in figure 3, the first sealing section 3 comprises a first fixation assembly 30 for fixating the dielectric 91 with respect to the first connector 2 in the first axial direction A1. In this exemplary embodiment, the first fixation assembly 30 comprises a first clamping body 31 with an at least partially frustoconical bore 32 for receiving the dielectric 91. The at least partially frustoconical bore 32 is concentric to or coaxial with the first connector axis C1. The at least partially frustoconical bore 32 tapers in a wedge direction W opposite to the ejection direction X. The first sealing section 3 further comprises a first conical wedge 33 that tapers in the wedge direction W. The first conical wedge 33 is displaceable or drivable into the at least partially frustoconical bore 32 for in cooperation with the first clamping body 31 fixating the dielectric 91. In particular, the first conical wedge 33 clampingly fixates and locally spreads or widens the dielectric 91 against the first clamping body 31. The dielectric 91 may be provided with one or more longitudinal cuts prior to insertion of the first conical wedge 33 to facilitate the widening.

In this exemplary embodiment, the first sealing section 3 comprises a first wedge drive member 35 that is displaceable in the first axial direction A1 relative to the first clamping body 31 to force the first conical wedge 33 into the at least partially frustoconical bore 32. The first wedge drive member 35 may be formed as a threaded flange that engages with a correspondingly threaded part associated with or integral to the first clamping body 31.

The first conical wedge 33 comprises a central passage or bore 34 with an internal diameter that is large enough for passage of the core 90, preferably with the placeholders 94, through said first conical wedge 33. Moreover, the central bore 34 allows for communication between the first connector inlet 21 and the first annular volume V1 through said first conical wedge 33. In this exemplary embodiment, the first connector inlet 21 is provided in the first wedge drive member 35 and communicates with the central bore 34 in the first conical wedge 33 through a radial opening in said first conical wedge 33.

The apparatus 1 further comprises a compression seal fitting 36 that lines the ejection aperture 20. The compression seal fitting 36 is compressible in the first axial direction A1 to seal the ejection aperture 20 while the core 90 projects out of said ejection aperture 20 in the ejection direction X. In this exemplary embodiment, the compression seal fitting 36 is formed by a plurality of rigid rings alternated in the first axial direction A1 with compressible rings.

In this example, the apparatus 1 is provided with an annular plug P that is fitted to or around the core 90. The annular plug P may comprise a rubber body and one or more annular sealing elements S, in particular O-rings, extending between the rubber body and the core 90. The rubber body and/or the one or more annular sealing elements S create an annular seal around the core 90. The annular plug P may be locked or fixed to or relative to the leading end LE of the core 90 in the first axial direction A1 with a fixation nut or the like. The annular plug 90 preferably has a diameter equal to or slightly greater than the diameter of the placeholders 94. Consequently, with the annular plug P fitted to the core 90 at the location of the ejection aperture 20, the ejection aperture 20 may have a diameter that is greater than the diameter of the core 90, while the compression seal fitting 36 can still effectively seal the ejection aperture 20 by establishing a compression fit around the annular plug P. Preferably, the annular plug P has a diameter that is equal to or slightly greater than the diameter of the placeholders 34. Hence, the annular plug P is removable from the ejection aperture 20 together with the core 90 when the compression seal fitting 36 is in the uncompressed state, to allow for extraction of the placeholders 94 through said ejection aperture 20 together with the ejection of the core 90.

Alternatively, if only the core 90 is to be ejected, i.e. when ejecting the core 90 from a cable of a different type without the placeholders 34, the annular plug P may not be necessary and the compression seal fitting 36 may seal the ejection aperture 20 directly around the core 90.

The apparatus 1 further comprises a release member 37 that is displaceable relative to the compression seal fitting 36 in the first axial direction A1 to compress or relax the compression seal fitting 36, thereby effectively sealing or releasing the core 90 and/or the annular plug P with respect to the ejection aperture 20. In this exemplary embodiment, the release member 37 is a threaded flange that is arranged to be torqued, screwed or otherwise displaced in the first axial direction A1 along a correspondingly threaded part of the first connector 2 for in cooperation with said correspondingly threaded part compressing or releasing the compression seal fitting 36. In this exemplary embodiment, the correspondingly threaded part is the first wedge drive member 35. The threaded flange is preferably externally accessible for applying torque, i.e. with the use of a wrench. The sealing fit of the compression seal fitting 36 on the core 90 and/or the annular plug P can thus be manually released from outside of the first connector 2, i.e. without requiring access to the compression seal fitting 36, the core 90 or the ejection aperture 20.

The first sealing section 3 is further provided with a separation member 38 for separating the second annular volume V2 in a pressure-tight manner from the first annular volume V1. In this example, the separation member 38 is provided with one or more annular sealing elements S, in particular O-rings, that establish an annular seal around the dielectric 91 upstream of the first clamping body 31 with respect to the ejection direction X.

The annular plug P, when inserted into and properly sealed with respect to the ejection aperture 20, can act as an aperture sealing member during at least a preparation stage of the core ejection.

The second sealing section 4 is located upstream of the first sealing section 3 with respect to the ejection direction X. The second sealing section 4 comprises a second fixation assembly 40 for fixating the outer sheath 93 in the first axial direction A1 and, optionally, a guide assembly 50 for fixating the conducting shield 92 in the axial direction A1, downstream of said second fixation assembly 40 in the ejection direction X, i.e. between the second fixation assembly 40 and the first fixation assembly 30 in the first axial direction A1. Further fixation assemblies may be provided for any additional layers, if applicable.

In this exemplary embodiment, the second fixation assembly 40, like the first fixation assembly 40, comprises a second clamping body 41 with an at least partially frustoconical bore 42 for receiving the outer sheath 93. The at least partially frustoconical bore 42 is concentric to or coaxial with the first connector axis C1. The at least partially frustoconical bore 42 tapers in the wedge direction W. The second sealing section 4 further comprises a second conical wedge 43 that tapers in the wedge direction W. The second conical wedge 43 is displaceable or drivable into the at least partially frustoconical bore 42 for in cooperation with the second clamping body 41 fixating the outer sheath 93. In particular, the second conical wedge 43 clampingly fixates and locally spreads or widens the outer sheath 93 against the second clamping body 41. The outer sheath 93 may be provided with one or more longitudinal cuts prior to insertion of the second conical wedge 43 to facilitate the widening.

In this exemplary embodiment, the second sealing section 4 comprises a second wedge drive member 45 that is displaceable in the first axial direction A1 relative to the second clamping body 41 to force the second conical wedge 43 into the at least partially frustoconical bore 42. The second wedge drive member 45 may be formed as a threaded flange that engages with a correspondingly threaded part associated with or integral to the second clamping body 41.

The second conical wedge 43 comprises a central passage or bore 44 with an internal diameter that is large enough for passage of the dielectric 91 and/or the conducting shield 92 through said second conical wedge 43. Moreover, the central bore 44 allows for communication between the second connector inlet 22 and the second annular volume V2 through said second conical wedge 43, i.e. though any unsealed gaps between the central bore 44 and the dielectric 91 and/or the conducting shield 92 extending within said central bore 44.

The guide assembly 50 comprises a third clamping body 53 with a central passage or bore 54 for guiding and/or positioning the conducting shield 92 in the first axial direction A1, and a receiving body 51 with an at least partially frustoconical bore 52 for receiving the third clamping body 53. The at least partially frustoconical bore 52 is concentric to or coaxial with the first connector axis C1. The at least partially frustoconical bore 52 tapers in the wedge direction W. In this exemplary embodiment, the third clamping body 53 is formed as a third conical wedge that tapers in the wedge direction W. The third clamping body 53 is positionable in the at least partially frustoconical bore 52

In contrast to the previously discussed fixation assemblies 30, 40, the guide assembly 50 does not require a wedge drive member. Instead, the third clamping body 53 is merely placed in the at least partially frustoconical bore 52 with the conducting shield 92 extending through the central bore 54. The third clamping body 53 and the receiving body 51 may be kept slightly spaced apart so that the second connector inlet 22 can communicate with the second annular volume V2 via said spacing between the third clamping body 53 and the receiving body 51.

Moreover, the receiving body 51 may be formed by the second conical wedge 43. More in particular, the at least partially frustoconical bore 52 may be a part of the central bore 44 in the second conical wedge 43. In other words, the third clamping body 53 can be inserted in the wedge direction W into the central bore 44 of the second conical wedge 43.

Alternatively, a separate receiving body (not shown) may be provided for cooperating with the third conical wedge 53 in a manner similar to the interaction between the second conical wedge 43 and the second clamping body 41.

The central passage or bore 54 has an internal diameter that is large enough for passage of the dielectric 91 and the conducting shield 92 through said third clamping body 53. Moreover, the central bore 54 also allows for communication between the second connector inlet 22 and the second annular volume V2 through said third clamping body 53, i.e. though any unsealed gaps between the central bore 54, the dielectric 91 and/or the conducting shield 92 extending within said central bore 54.

In other words, the second connector inlet 22 may communicate, depending on the configuration of the first connector 2, with the second annular volume V2 via the third clamping body 53, the second conical wedge 43 and any further wedge or parts of the first connector 2 necessary to clamp the conducting shield 92, the outer sheath 93 and/or any further layers of the cable 9.

Note that the separation member 38 is provided with one or more annular sealing elements S, in particular O-rings, which are arranged to sealingly abut the second clamping body 41 at a location upstream of the first annular volume V1 with respect to the ejection direction X to further seal and separate the first annular volume V1 and the second annular volume V2 with respect to or from each other.

As further shown in figure 3, the first connector 2 may comprise a securing member 6 to tightly engage onto and secure the outer sheath 93 of the cable 9 in the first connector 2 in the first axial direction A1. One or more further securing members (not shown) may be added upstream of the securing member 6 with respect to the ejection direction X to even more securely hold the cable 9. The one or more further securing members may be nested into the securing member 6 by a suitable male-female connection and/or with the use of fasteners. The securing member 6 may be provided with one or more annular sealing elements S, in particular O-rings, to seal and/or retain the cable 9 inside said securing member 6.

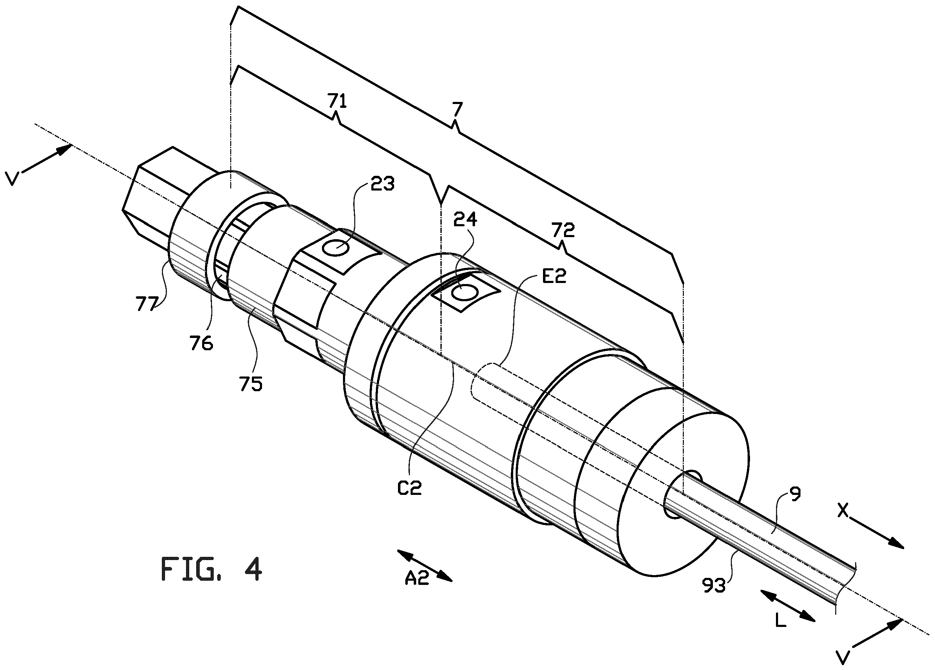

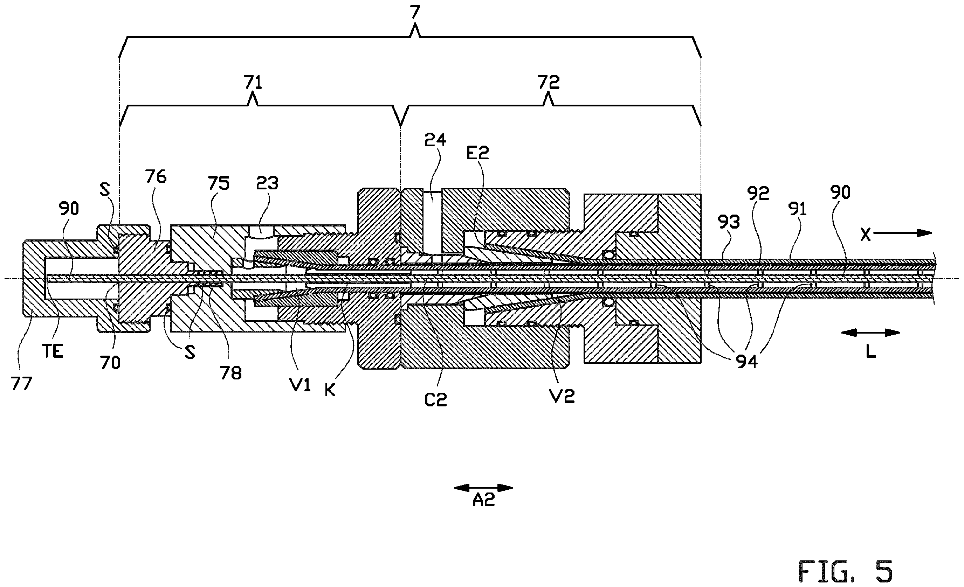

As shown in figures 4 and 5, the second connector 7, defines a second connector axis C2 extending in a second axial direction A2. The second connector 7 is arranged or configured for connection to the second end E2 of the cable 9. When connected, the longitudinal direction L of the cable 9, at the said second end E2, is parallel or substantially parallel to the second axial direction A2. Depending on the relative orientation between the first end E1 and the second end E2, the first axial direction A1 and the second axial direction A2 may be parallel.

As show in figure 5, the second connector 7 comprises an access aperture 70 concentric to or coaxial with the second connector axis C2 for passing a trailing end TE of the core 90 projecting from the stripped second end E2 through and out of the second connector 7. The freely projecting trailing end TE of the core 90 may be accessed at the second end E2 of the cable 9 to run electrical current through said core 90, i.e. for the purpose of heating said core 90 and thereby weakening the layers and/or the placeholders 94 surrounding said core 90 to facilitate the ejection.

Like the first connector 2, the second connector 7 comprises a first sealing section 71 and a second sealing section 72 for sealing of the first annular volume V1 and the second annular volume V2, respectively, at or near the second end E2 in a pressure-tight manner. In this example, the second connector 7 comprises a third connector inlet 23 in the first sealing section 71 and a fourth connector inlet 24 in the second sealing section 72 for pressurizing the first annular volume V1 and the second annular volume V2, respectively. Alternatively, the second connector 7 may have a sealing functionality only, thus not requiring the third connector inlet 23 and the further connector inlet 24. The first sealing section 71 and the second sealing section 72 of the second connector 7 may be similar or identical in construction to the first sealing section 3 and the second sealing section 4 of the first connector 2 and will therefore not be discussed in further detail hereafter. It will however be clear to one skilled in the art that the features and/or functionality of the first connector 2 can be applied, *mutatis mutandis,* to the second connector 7.

The second connector 7 differs from the first connector 2 in that it comprises an access aperture 70 concentric to the second connector axis C2 for passing a trailing end TE of the core 90 projecting from the second end E2 through and out of the second connector 2 in the second axial direction A2, in a direction away from the ejection direction X. The second connector 7 further comprises a sealing grommet 78 for sealing the access aperture 70 in a pressure-tight manner while the trailing end TE projects out of the second connector 7 through said access aperture 70. The sealing grommet 78 may comprises one or more annular sealing elements S, in particular O-rings.

The apparatus 1 further comprises an end cap 77 that may be provided as a part of the second connector 7. Alternatively, the end cap 77 may be a part that is provided separately, i.e. as part of the apparatus 1 as a whole. The end cap 77 is connectable to the second connector 7 for sealing the access aperture 70 in a pressure-tight manner, in particular when the trailing end TE is retracted out of the access aperture 70 into the second connector 7, i.e. in the ejection direction X. The End cap 77 may for example be connected to the second connector 7 just prior to the retraction of said trailing end TE out of the access aperture 70, to ensure that the pressure in the first annular volume V1 and/or the second annular volume V2 does not escape. The end cap 77 and/or the second connector 7 may be provided with one or more annular sealing elements S, in particular O-rings, between the end cap 77 and the second connector 7 to ensure that the end cap 77 can seal the second connector 7 in a pressure-tight manner.

In this exemplary embodiment, the second connector 7 is provided with an alternative first wedge drive member 75 and an access member 76 for connecting the end cap 77 to the alternative first wedge drive member 75. The sealing grommet 78 is provided in the alternative first wedge drive member 75. The access member 76 slides over the freely projecting portion of the trailing end TE of the core 90 and provides an external thread that can be engaged with an internal thread of the end cap 77.

It will be clear to one skilled in the art that the configuration of the end cap 77 and the second connector 7 at the side of said end cap 77 may be subject to many variations that fall within the scope of the present invention.

As best seen in figures 1 and 2, the core collector 8 comprises a pressure-tight housing 80 that is connectable to the first connector 2 to communicate in a pressure-tight manner with the ejection aperture 20. Preferably, the core collector 8 is a winch. As such, the core collector 8 is provided with a reel R that is located in and/or fully contained within the pressure-tight housing 80 and a lever 81 external to the pressure-tight housing 80. The lever 81 is rotationally fixed to the reel R inside the pressure-tight housing 80 for manual rotation of said reel. Alternatively, the reel R may be driven by a motor.

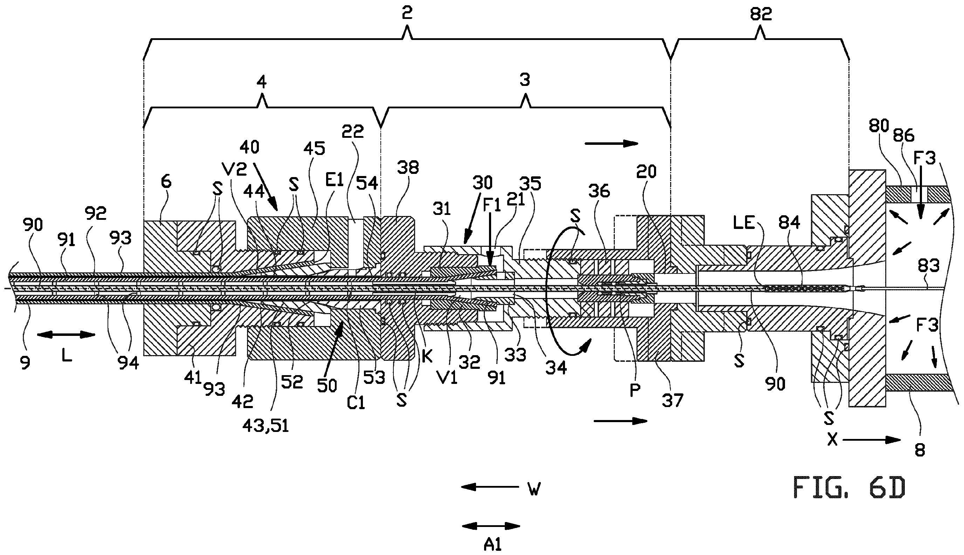

As shown in figure 6D, the leading end LE of the core 90 may be connected to a pulling rope 83 of the reel R via a suitable connection element 84, i.e. Chinese fingers. When the reel R is rotated, in this case in a counterclockwise direction, as shown in figure 2, it will automatically start to collect and/or wind up the pulling rope 83 of figure 6D, and subsequently the core 90 connected to said pulling rope 83.

As further shown in figure 3, the apparatus 1 comprises a coupling section 82 in the form of or comprising one or more coupling flanges for establishing a pressure-tight coupling of the core collector 8 to the first connector 2, or *vice versa.* In this example, the coupling section 82 forms a channel 85 to guide the core 90 from the ejection aperture 20 towards the core collector 8. Preferably, the channel 85 widens in the ejection direction X to allow for greater freedom of movement of the core 90 during the collection. Alternatively, the channel 85 may have a constant cross section.

The air-tight housing 80 is arranged for taking over the function of the annular plug P as aperture sealing member as soon as the annular plug P is pulled from the ejection aperture 20 during a collection stage of the core ejection, while maintaining the pressure in the first annular volume V1 and/or the second annular V2 as created during the preparation stage of the core ejection, as will be explained in more detail in the method discussed hereafter.

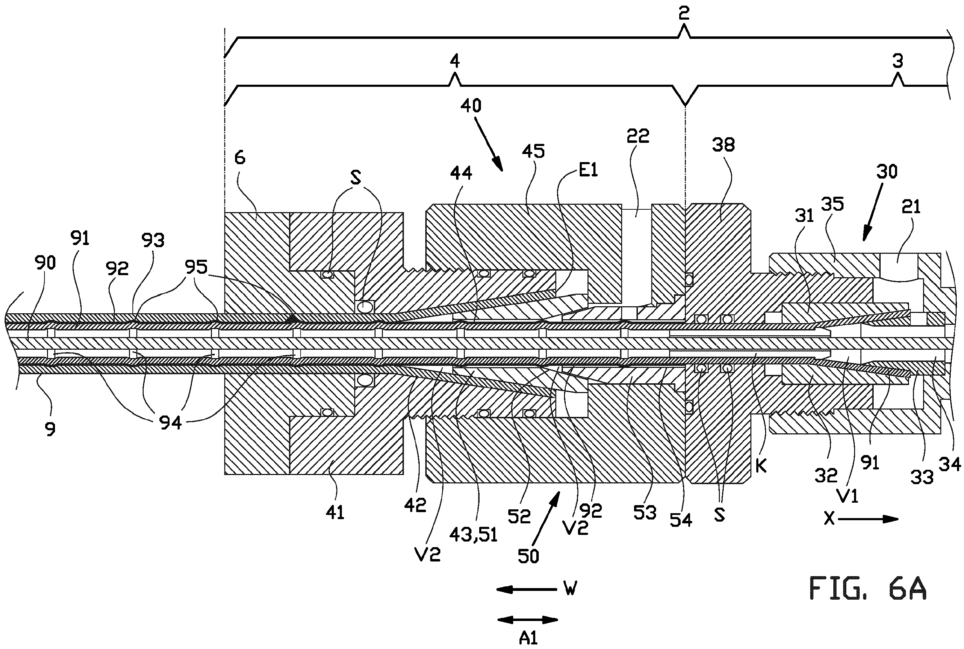

The method for ejecting the core 90 from the cable 9 using the aforementioned apparatus 1 will be elucidated hereafter with reference to figures 6A-6F. Figures 6A-6C show the steps of the method during the preparation stage of the core ejection, i.e. the stage in which the cable 9 is pressurized and/or heat is applied, but the core 90 is not yet being ejected. Figures 6D-6F show the steps of the method during the core collection stage, i.e. when the core 90 is actively being ejected.

Figure 6A shows the situation in which the first end E1 of the cable 9 is received in the first connector 2. The first end E1 has been stripped prior to the insertion so that the layers located radially inward of the outer sheath 93 progressively project from said first end E1 in the ejection direction X. The first connector 2 has been assembled onto the first end E1, starting with the second sealing section 4 for securing, fixating and/or clamping the outer sheath 93 and the conducting shield 92. In particular, the one or more securing members 6 have been slid over said first end E1 into a position around the outer sheath 93. Subsequently, the second clamping body 41 is fitted around the outer sheath 93 and the second conical wedge 43 is inserted into the at least partially frustoconical bore 42 with the outer sheath 93 wedged in between. The same process is repeated by inserting the third clamping body 53 into the at least partially frustoconical bore 52 of the receiving body 51, which in this case is formed by the second conical wedge 43. The conducting shield 92 can extend through the central bore 54 in the third clamping body 53 and is terminated, i.e. cut-off, just outside the third clamping body 53 in the ejection direction X. The second conical wedge 43 may be forced in the wedge direction W into tight engagement with the outer sheath 93 by torqueing, screwing or otherwise displacing the second wedge drive member 45 over the second clamping body 41 in said wedge direction W. The third clamping body 53 is held in position by placing the separation member 38 against the second wedge drive member 45, thereby effectively sealing the first sealing section 3 from the second sealing section 4.

As further shown in figure 6A, the first sealing section 3 has been assembled by placing the first clamping body 31 over the dielectric 91 and by subsequently inserting the first conical wedge 33 into the at least partially frustoconical bore 32 with the dielectric 91 wedged in between. The first conical wedge 33 may be forced in the wedge direction W into tight engagement with the dielectric 91 by torqueing, screwing or otherwise displacing the first wedge drive member 35 over the first clamping body 31 and/or the separation member 38 in said wedge direction W.

Note that an optional spacer K may be provided inside the dielectric 91 at the position of the one or more annular sealing elements S in the separation member 38 to maintain the dielectric 91 at a constant diameter. Hence, a proper abutment and/or sealing between the dielectric 91 and the one or more annular sealing elements S may be ensured. The placeholders 94 may be removed from the dielectric 91 at said spacer K. The spacer K has an inner diameter that is greater than the outer diameter of the core 90 to allow for communication between the first connector inlet 21 and the first annular volume V1 through said spacer K.

As shown in figure 3, the annular plug P is concentrically arranged around core 90 and positioned together with said core 90 in the ejection aperture 20 of the first connector 2, thereby effectively acting as the aperture sealing member that seals the first annular volume V1 at said ejection aperture 20 during the preparation stage of the core ejection. The release member 37 is torqued, screwed and/or otherwise displaced in the wedge direction W, i.e. with the use of a wrench or the like, to compress the compression seal fitting 36 in to sealing abutment with both the ejection aperture 20 and the annular plug P.

In the assembled state of figure 6A, the first connector 2 has effectively sealed the first annular volume V1 and the second annular volume V2 at or near the first end E1 of the cable 9. Hence, the annular volumes V1, V2 may now be pressurized to prepare for the core ejection. For this purpose, the first connector inlet 21 and the second connector inlet 22 are connected to external sources of pressure, i.e. via suitable tubes (not shown).

The same process is repeated with the second connector 7 at the second end E2 of the cable 9 to seal the respective annular volumes V1, V2 at or near said second end E2.

It is noted that core collector 8 may not yet be connected to leave the leading end LE of the core 90 exposed, i.e. for the purpose of connecting a heating element (not shown). Similarly, the end cap 77 may be kept off the second connector 7 to expose the trailing end TE of the core 90, i.e. for connecting a heating element (not shown). In particular, an electrical current can be applied through the core 90 to heat said core 90 and the layers of the cable 9 around it.

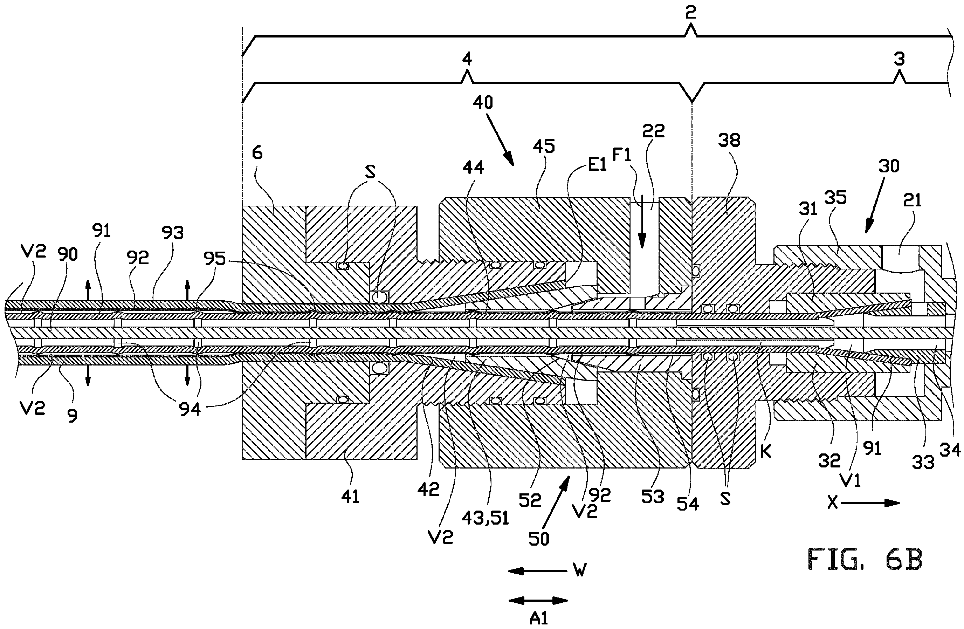

Figure 6B shows the situation in which the second annular volume V2 is pressurized through the second connector inlet 22, as schematically represented with arrow F2, to expand the outer sheath 93, as schematically shown with small arrows just outside of the first connector 2, downstream of the securing member 6 in the wedge direction W. The second annular volume V2 may be simultaneously pressurized via the fourth connector inlet 24 in the second connector 7 from the second end E1 of the cable 9. By expanding the outer sheath 93 first, the second annular volume V2 can be increased slightly around the dielectric 91, thereby allowing for the dielectric 91 to be expanded in the next step of the method. The conducting shield 92 may be expanded together with the outer sheath 93 or it may remain in place until the dielectric 91 is expanded. The conducting shield 92 is permeable to fluid and can easily deform. It should therefore not hinder the subsequent expansion of the dielectric 91.

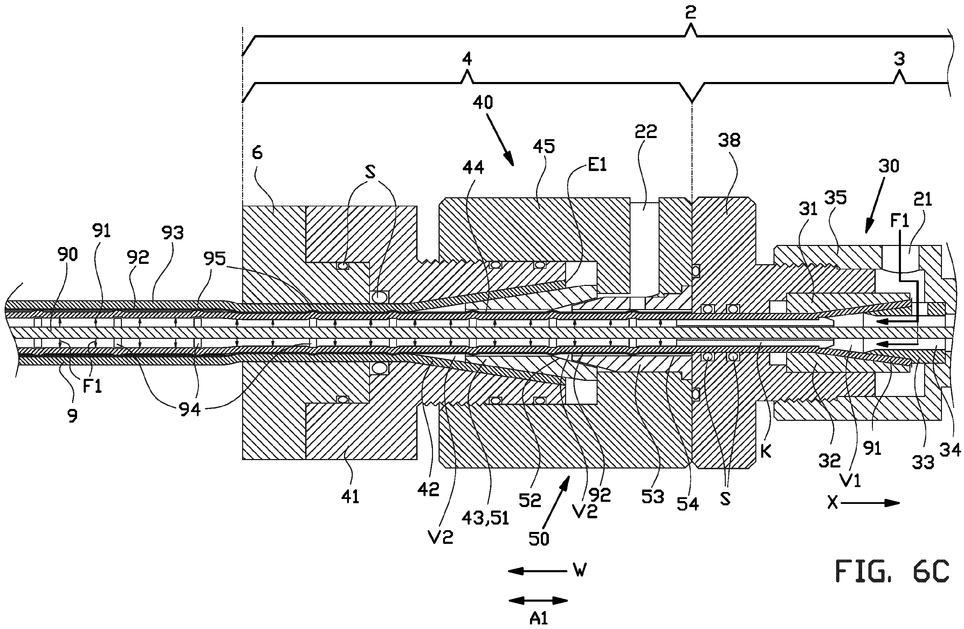

Figure 6C shows the situation in which the first annular volume V1 is pressurized through the first connector inlet 21, as schematically represented with arrow F1, to expand the dielectric 91 towards the previously expanded outer sheath 93 and/or the conducting shield 92, as schematically shown with the radially outwardly pointing arrows F1 within the dielectric 91. The first annular volume V1 may be simultaneously pressurized via the third connector inlet 23 in the second connector 7 from the second end E1 of the cable 9. The first annular volume V1 and the second annular volume V2 may be pressurized at different moments in time and/or at different pressures F1, F2. In particular, the method may comprise the step of lowering the pressure F2 in the second annular volume V2 prior to or during the step of pressurizing the first annular volume V1. Hence, it can be prevented that the pressure F2 in the second annular volume V2 hinders or counteracts the expansion of the dielectric 91.

The expansion of the dielectric 91 in figure 6C effectively loosens the placeholders 94 from the dielectric 91 in the radial direction prior to ejection of the core 90. In particular, the annular ridges 95 formed in the dielectric 91 during the crimping of the outer sheath 93 when said cable 9 was first manufactured can be effectively lifted clear from the placeholders 94 in the radially outward direction, thereby reducing the resistance of said placeholders 94 to move together with the core 90 out of the cable 9 in the ejection direction X.

Notice that this effect is greatest outside of the first connector 2, i.e. downstream of said first connector 2 in the wedge direction W. The length of the cable 9 inserted into the first connector 2 may not be expanded to the same extent or not at all. However, the cable 9 extends over only a small length within the first connector 2, over which length the resistance of the core 90 and placeholders 94 to ejection can be easily overcome. It is the length of the cable 9 between the first connector 2 and the second connector 7 where the aforementioned two-step expansion has the greatest effect on reducing the resistance of the core 90 and placeholders 94 to ejection.

The aforementioned steps of the preparation stage may optionally be repeated in one or more cycles in which the pressure is reduced or the apparatus as a whole is depressurized before again pressurizing the first annular volume and/or the second annular volume. In particular, it has been found that by repeatedly pressurizing the first annular volume and/or the second annular volume, the tendency of the outer sheath 93 and/or the dielectric 91 to return to its original diameter can be reduced. In other words, the outer sheath 93 and/or the dielectric 91 are increasingly deformed plastically rather than elastically.

Figure 6D shows the situation in which the core collector 8 is connected or coupled to the first connector 2. Prior to or during the connection of the core collector 8 to the first connector 2, the leading end LE of the core 90 is connected with the connection element 84 to the pulling rope 83 of the reel (not shown in figure 6D). During this process, the annular plug P remains in place to ensure that the pressure in the first annular volume V1 is maintained. The pressure-tight housing 80 of the core collector 8 has subsequently been pressurized through the collector inlet 86, as schematically represented with arrow F3. Preferably, the pressure F3 inside the pressure-tight housing 80 is made equal or substantially equal to the pressure F1 in the first annular volume V1 at the other side of the annular plug P. The pressure-tight housing 80 can now take over the functionality of the annular plug P as aperture sealing member as soon as the annular plug P is removed from the ejection aperture 20. In other words, the annular plug P is ready to be removed without causing a significant loss of pressure F1 in the first annular volume V1. In figure 6D, the release member 37 is already unscrewed in the ejection direction X to decompress the compression seal fitting 36 that allows for the annular plug P to be removed or released from the ejection aperture 20. This step is preferably done as close as possible to starting the actual core ejection to prevent unintentional leakage.

During the aforementioned step, the end cap 77 is connected to the second connector 7, as shown in figures 4 and 5, to prevent a loss of pressure through the access aperture 70 when the trailing end TE of the core 90 is retracted into the second connector 7 in the ejection direction X.

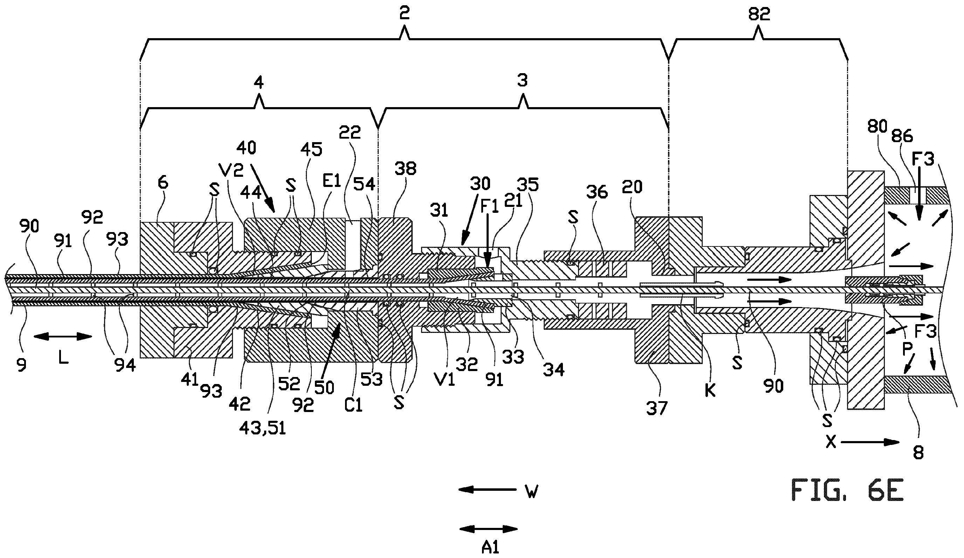

Figure 6E shows the situation in which the core collector 8 has started its pull on the core 90, thereby pulling said core 90 and associated placeholders 94 towards the core collector 8 in the ejection direction X. Simultaneously, the annular plug P is released and/or removed from the ejection aperture 20 and is moved together with the core 90 in the ejection direction X towards the core collector 8. Pressure differences, if any, between the pressure-tight housing 80 and the first annular volume V1 are equalized. The core ejection has now started. The place holders 94 are extracted through the ejection aperture 20 together with the ejection of the core 90.

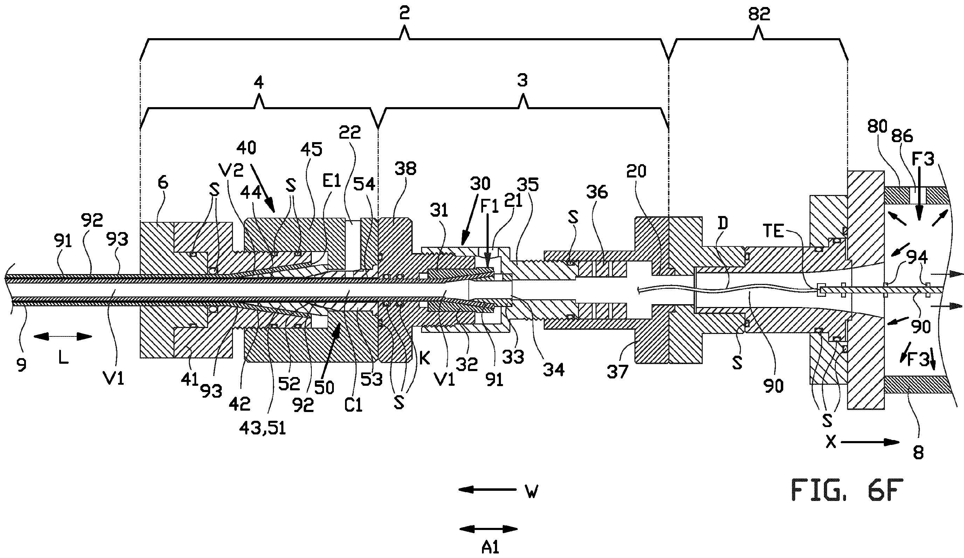

Figure 6F shows the completion of the core ejection as the trailing end TE of the core 90 and the associated placeholders 94 leaves the cable 9 through the first connector 2. All that remains of the cable 9 is an empty shell formed by the outer sheath 93, the conducting shield 92 and the dielectric 91. The inner diameter of the dielectric 91 provides sufficient space for the insertion of a modern type data carrier, i.e. an optical waveguide.

Throughout the collection stage of the core ejection, at least the pressure F1 in first annular volume V1 can be maintained and/or controlled, and preferably also the pressure F2 in the second annular volume V2.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

For example, it is noted that although the connectors 2, 5 as shown are configured for ejecting of a core 90 from a coaxial cable, in particular a COAX 3 Bamboo cable, the principle of ejecting a core 90 while simultaneously maintaining an annular volume of the cable 9 pressurized, can also be applied to different types of cables, i.e. cables having a different construction. For example, electrical cables, combined power and data cables, GPLK, PE, GPE, GPEW or GPEWG cables, cables for high-rise buildings, umbilical cables, etcetera. A cable may have a foam dielectric instead of the placeholders. In that case, a single sealing section may be provided to pressurize a single annular volume occupied by said foam dielectric.

Alternatively, for cables having more than two annular volumes, connectors with further sealing sections may be provided to pressurize the additional annular volumes in a manner analogous to the aforementioned sealing sections.

Mechanisms other than wedges could be envisioned that would still be within the scope of the present invention. Also, readily sealing elements other than O-rings may be suitably provided to seal transitions between any of the parts of the connectors 2, 7 and/or the core collector 8 that require sealing.

In a further example, the connectors 2, 7 may comprise further inlets or access ports for the insertion of heating elements to heat the layers of the cable 9, i.e. the conducting shield 92. Moreover, said further inlets or access ports may be used to insert sensors for monitoring pressure, temperature, proximity, movement or other parameters relevant for the core ejection.

Optionally, the apparatus 1 may comprise a control unit 10, as schematically shown in figure 1, to control and/or automate one or more of the aforementioned steps of the core ejection method, possibly in combination with signals from the aforementioned sensors. The control unit 10 is operationally and/or electronically connected to the first connector 2, the second connector 7 and/or the core collector 8. An interface may be provided at the control unit 10 to allow for human intervention and/or manual control.

It is further envisioned that the core collector 8 may already be connected to the first connector 2 prior to the collection stage of the method, i.e. when the core ejection does not require heating and/or when access to the leading end LE of the core 90 can be facilitated in another way, i.e. through a sealable access port in the pressure-tight housing 80 of the core collector 8.

In yet another embodiment, the method may comprise the step of only removing the core 90, i.e. by (electrically) heating the core 90 until the connection between the core 90 and the placeholders 94 is sufficiently weakened to pull out the core 90 while the placeholders 94 remain in position within the cable 9. The placeholders 94 and/or any other obstacles that remain in the cable 9 can subsequently be removed by at least partially dismounting the connectors 2, 7 and allowing the insertion of suitable means for cutting or drilling out said placeholders 94. Alternatively, an extraction cord D, as shown in figure 6F, may be introduced into the cavity vacated by the core 90, i.e. by pulling said extraction cord D into the cable 9 simultaneously with the ejection of the core 90. The extraction cord D may have a considerably higher tensile strength than the core 90 to allow for a greater tensile force to be exerted during the extraction of the placeholders 95. The extraction cord D may for example comprise ultra-high-molecular-weight polyethylene (UHMWPE), also known as 'Dyneema'. The extraction cord D may be fitted with a scraping member with a diameter greater than the core 90 to catch, scrape and/or pull out the placeholders 94.

### LIST OF REFERENCE NUMERALS

- 1: apparatus
- 10: control unit
- 2: first connector
- 20: ejection aperture
- 21: first connector inlet
- 22: second connector inlet
- 23: third connector inlet
- 24: fourth connector inlet
- 3: first sealing section
- 30: first fixation assembly
- 31: first clamping body
- 32: frustoconical bore
- 33: first conical wedge
- 34: central bore
- 35: first wedge drive member
- 36: compression seal fitting
- 37: release member
- 38: separation member
- 4: second sealing section
- 40: second fixation assembly
- 41: second clamping body
- 42: frustoconical bore
- 43: second conical wedge
- 44: central bore
- 45: second wedge drive member
- 50: guide assembly
- 51: receiving body
- 52: frustoconical bore
- 53: third clamping body
- 54: central bore
- 6: securing member
- 7: second connector
- 70: access aperture
- 71: first sealing section
- 72: second sealing section
- 75: alternative first wedge drive member
- 76: access member
- 77: end cap
- 78: sealing grommet
- 8: core collector
- 80: housing
- 81: lever
- 82: coupling section
- 83: pulling rope
- 84: connection element
- 85: channel
- 86: collector inlet
- 9: cable
- 90: core
- 91: dielectric
- 92: conducting shield
- 93: outer sheath
- 94: place holder
- 95: annular ridge
- A1: first axial direction
- A2: second axial direction
- C1: first connector axis
- C2: second connector axis
- D: extraction cord
- E1: first end
- E2: second end
- F1: first pressure
- F2: second pressure
- F3: third pressure
- K: spacer
- L: longitudinal direction
- LE: leading end
- P: annular plug
- R: reel
- S: annular sealing element
- TE: trailing end
- X: ejection direction
- V1: first annular volume
- V2: second annular volume
- W: wedge direction

## Claims

1. Apparatus for ejecting a core from a cable, in particular a coaxial cable, wherein the apparatus comprises a first connector that defines a first connector axis extending in a first axial direction, wherein the first connector comprises a first sealing section for connection to a first end of the cable in the first axial direction and for sealing a first annular volume of the cable at said first end in a pressure-tight manner, wherein the first annular volume surrounds the core, wherein the first sealing section further comprises a first connector inlet for pressurizing said first annular volume, **characterized in that** the first connector comprises an ejection aperture for passing a leading end of the core projecting from the first end through and out of the first connector in an ejection direction parallel to the first axial direction, **and in that** the apparatus further comprises an aperture sealing member for sealing the ejection aperture in a pressure-tight manner while the core is being ejected through said ejection aperture.

2. Apparatus according to claim 1, wherein the apparatus comprises an annular plug that is insertable into the ejection aperture in the first axial direction, wherein the aperture sealing member, during a preparation stage of the core ejection, is formed by said annular plug,
preferably wherein the apparatus further comprises a compression seal fitting that lines the ejection aperture, wherein the compression seal fitting is compressible in the first axial direction to seal the annular plug with respect to the ejection aperture,
more preferably wherein the annular plug is removable from the compression seal fitting in the ejection direction when the compression seal fitting is in an uncompressed state.

3. Apparatus according to claim 1, wherein the apparatus comprises a core collector, in particular a winch, for pulling in the core in the ejection direction through the ejection aperture, wherein the core collector comprises a pressure-tight housing that is connectable to the first connector to communicate in a pressure-tight manner with the ejection aperture, wherein the aperture sealing member, during a collection stage of the core ejection, is formed by said pressure-tight housing,
preferably wherein the pressure-tight housing, when connected to the first connector, is arranged for maintaining pressure in the cable,
more preferably wherein the core collector comprises a collector inlet for pressurizing the pressure-tight housing.

4. Apparatus according to claim 3, wherein the apparatus comprises an annular plug that is insertable into the ejection aperture in the first axial direction, wherein the aperture sealing member, during a preparation stage of the core ejection, is formed by said annular plug, wherein the pressure-tight housing is arranged for taking over the function of annular plug as aperture sealing member in the collection stage of the core ejection,
preferably wherein the apparatus comprises a release member for releasing the annular plug in the ejection direction from the ejection aperture when the pressure-tight housing is connected to the first connector,
more preferably wherein the release member is externally operable with respect to the first connector and/or the core collector.

5. Apparatus according to any one of the preceding claims, wherein the cable comprises a dielectric, wherein the first sealing section comprises a first fixation assembly for fixating the dielectric with respect to the first connector in the first axial direction,
preferably wherein the first fixation assembly comprises a first clamping body with an at least partially frustoconical bore for receiving the dielectric and a first conical wedge that is drivable into said at least partially frustoconical bore to clampingly fixate and locally widen the dielectric against the first clamping body, wherein the first conical wedge comprises a central bore that allows for communication between the first connector inlet and the first annular volume through the first conical wedge.

6. Apparatus according to any one of the preceding claims, wherein the first connector comprises a second sealing section upstream of the first sealing section with respect to the ejection direction for sealing a second annular volume of the cable radially outside of the first annular volume at said first end in a pressure-tight manner and a second connector inlet for pressurizing said second annular volume,
preferably wherein the first sealing section comprises a separation member for separating the second annular volume in a pressure-tight manner from the first annular volume.

7. Apparatus according to claim 6, wherein the cable comprises an outer sheath, wherein the second sealing section comprises a second fixation assembly for fixating the outer sheath with respect to the first connector in the first axial direction,
preferably wherein the second fixation assembly comprises a second clamping body with an at least partially frustoconical bore for receiving the outer sheath and a second conical wedge that is drivable into said at least partially frustoconical bore to clampingly fixate and locally widen the outer sheath against the second clamping body, wherein the second conical wedge comprises a central bore that allows for communication between the second connector inlet and the second annular volume through the second conical wedge.

8. Apparatus according to claim 7, wherein the cable further comprises a conducting shield extending concentrically inside the outer sheath, wherein the second sealing section comprises a guide assembly for guiding the conducting shield through the first connector in the first axial direction,
preferably wherein the guide assembly comprises a third clamping body with a central bore for guiding the conducting shield and a receiving body for receiving the third clamping body,
more preferably wherein the second fixation assembly comprises a second clamping body with an at least partially frustoconical bore for receiving the outer sheath and a second conical wedge that is drivable into said at least partially frustoconical bore to clampingly fixate and locally widen the outer sheath against the second clamping body, wherein the second conical wedge comprises a central bore that allows for communication between the second connector inlet and the second annular volume through the second conical wedge, wherein the receiving body is the second conical wedge.

9. Apparatus according to any one of the preceding claims, wherein the apparatus further comprises a second connector that defines a second connector axis extending in a second axial direction, wherein the second connector comprises a third sealing section for receiving a second end of the cable opposite to the first end and for sealing the first annular volume in a pressure-tight manner at said second end,
preferably wherein the second connector comprises an access aperture concentric to the second connector axis for passing a trailing end of the core projecting from the second end through and out of the second connector in the second axial direction, wherein the second connector further comprises a sealing grommet for sealing the access aperture in a pressure-tight manner while the trailing end projects out of the second connector through said access aperture,
more preferably wherein the apparatus further comprises an end cap that is connectable to the second connector for sealing the access aperture in a pressure-tight manner when the trailing end is retracted out of the access aperture into the second connector.

10. Method for ejecting a core from a cable, in particular a coaxial cable, wherein the method comprises the steps of:
- sealing a first annular volume of the cable at a first end of the cable, wherein said first annular volume surrounds the core;
- pressurizing the first annular volume; and
- ejecting the core from the cable and simultaneously maintaining the first annular volume sealed at the first end.

11. Method according to claim 10, wherein the cable comprises a dielectric, wherein the first annular volume is located radially within the dielectric,
preferably wherein the cable comprises placeholders for concentrically positioning the core relative to the dielectric, wherein the method comprises the step of loosening the placeholders from the dielectric by expanding the dielectric through the pressurization of the first annular volume prior to the step of ejecting the core from the cable.

12. Method according to claim 10 or 11, wherein the cable comprises a second annular volume radially outside the first annular volume, wherein the method further comprises the steps of:
- sealing the second annular volume at the first end; and
- pressurizing the second annular volume, preferably wherein the method comprises the step of pressurizing the first annular volume and the second annular volume with different pressures and/or at different points in time,
more preferably wherein the cable comprises an outer sheath and a dielectric located radially between the core and the outer sheath, wherein the second annular volume is located radially between the dielectric and the outer sheath, wherein the method comprises the steps of:
- initially pressurizing the second annular volume to expand the outer sheath;
- subsequently pressurizing the first annular volume to expand the dielectric against the expanded outer sheath; and
- then ejecting the core from the cable,
most preferably wherein the method further comprises the step of lowering the pressure in the second annular volume prior to or during the step of pressurizing the first annular volume.

13. Method according to any one of claims 10-12, wherein the method further comprises the step of heating the core, preferably by putting an electrical current on the core, while maintaining the first annular volume sealed at the first end.

14. Method according to any one of claims 10-13, wherein the method further comprises the steps of:
- sealing the first annular volume at a second end of the cable opposite to the first end; and
- ejecting the core from the cable and simultaneously maintaining the first annular volume sealed at both the first end and the second end.

15. Method according to any one of claims 10-14, wherein the core is collected in a core collector having a pressure-tight housing connectable in an pressure-tight manner with the first annular volume,
preferably wherein the pressure-tight housing is pressurized to the same or substantially the same pressure as the first annular volume prior to connection to said first annular volume.

16. Method according to any one of claims 10-15, using the apparatus according to any one of claims 1-9,
preferably wherein the apparatus comprises an annular plug that is insertable into the ejection aperture in the first axial direction and a core collector for pulling in the core in the ejection direction through the ejection aperture, wherein the core collector comprises a pressure-tight housing that is connectable to the first connector to communicate in a pressure-tight manner with the ejection aperture, wherein the method further comprises the steps of:
- inserting the annular plug into the ejection aperture to act as the aperture sealing member during a preparation stage of the core ejection; and
- removing the annular plug from the ejection aperture in the ejection direction during a collection stage of the core ejection;
wherein the method further comprises the steps of:
- connecting the pressure-tight housing to the first connector prior to removing the annular plug from the ejection aperture; and
- simultaneously with the removal of the annular plug from the ejection aperture taking over the function of annular plug as aperture sealing member with the pressure-tight housing.
